Europäisches Patentamt

(19) European Patent Office

Office européen des brevets

(11) EP 0 882 994 A1

(12) EUROPEAN PATENT APPLICATION

(43) Date of publication:
09.12.1998 Bulletin 1998/50

(51) Int. Cl.$^6$: **G01R 31/28**, H04B 17/00

(21) Application number: 98201844.2

(22) Date of filing: 03.06.1998

(84) Designated Contracting States:
AT BE CH CY DE DK ES FI FR GB GR IE IT LI LU
MC NL PT SE
Designated Extension States:
AL LT LV MK RO SI

(30) Priority: 05.06.1997 BE 9700487

(71) Applicant:
Siemens ATEA, naamloze vennootschap
2200 Herentals (BE)

(72) Inventors:
• Trog, Willy
2070 Zwijndrecht (BE)
• de Meyer, Karel
2930 Brasschaat (BE)
• de Ceulaer, Bart
2200 Noorderwijk (BE)
• Helsen, Eddy
2440 Geel (BE)
• Moonen, Marc
3001 Heverlee (BE)
• Vandaele, Piet
8650 Merkem (BE)

(74) Representative:
Debrabandere, René
Bureau De Rycker nv
Arenbergstraat 13
2000 Antwerpen (BE)

(54) **Method and device for the characterization of a network**

(57) Method for the determination of transmission characteristics of a transmission network, wherein a digital test signal is converted to an analogous signal, is transmitted by this network under control of a burst signal, and is detected at the receiver side. Transmission characteristics are calculated by means of the relation of the received and the transmitted digital signal.

*Fig.1*

EP 0 882 994 A1

## Description

This invention relates to a method for the determination of transmission characteristics of a transmission network, such as a cable television network, a coaxial network, a twisted pair network or components, such as sensors, transmission units, measuring value transformers, regulating units, control units, electrical filters or others.

Particularly, the invention relates to a method for the determination of transmission characteristics of a transmission network connecting a transmitter and a receiver, which method comprises the following steps:

- the conversion of a digital test signal, built up of a sum of sinusoidal waves of different frequencies into an analogous signal at a first sampling frequency,
- the transmission of this analogous signal by means of the network, from the transmitter to the receiver, under the control of a burst signal,
- the detection of the transmitted analogous signal by the receiver and the conversion of the received analogous signal into a received digital signal at a second sampling frequency which either differs from the first or not,
- the storage of the received digital signal,
- the calculation of said transmission characteristics based upon the received digital signal and the digital test signal.

At present, networks for transmitting signals are widely used. An example for an environment in which such a network is applied can be found in the cable television technique. In its most general form, such an environment consists of a transmitter and a receiver connected by a transmission network. Signals can be transmitted by means of the network, under the control of a burst signal.

Methods for the determination of transmission characteristics of such networks, such as amplitude response, phase response, etc. are known from the state of the art.

A method as mentioned above is disclosed in US-A-4.301.536. According to this method a set of test signals with a random phase is transmitted, more particularly digitally generated multi-tones, the frequences of which are important. The transmitter sample frequency and the reveiver sample frequency must be the same.

This method results in a measuring value which is obtained by averaging over the measuring period several values obtained from the several test signals of the set.

This method is consequently slow. Moreover windowing is required to avoid so-called leakage in the data, what results in deforming of the results.

Another method, pertaining to the state of the art, uses a network analyzer for the determination of the transmission characteristics of a transmission network in a system whereby transmitter and receiver are accessible at the same location.

Transmission networks, such as the cable television network, can be very long. In the example of cable television, the distance bridged by the network can be more than 50 km.

Consequently, with the application of the above-described method, very slow sweeping steps (sweeps) are required. Inevitably, slow sweep steps lead to long measuring periods. This is a disadvantage inherent to this method.

Furthermore, this method results in a measuring value which is obtained during the measuring period and does not result in an immediate response.

Especially if one is working with transmission according to the burst mode time multiplex system (Burst Mode Time Division Multiplex Access), this is a disadvantage.

Still another method is applied for the determination of transmission characteristics of networks whereby the transmitter and the receiver are not accessible at the same location.

According to this method, the amplitude response is determined by sweeping the whole frequency band, using a sweep generator at the transmitter side.

At the receiver side, by means of a spectrum analyzer adjusted in the maximum hold mode, the frequency response of the transmission network is measured.

However, the spectrum analyzer will have built up a response characteristic only after some sweeps generated by the sweep generator.

In such a manner, the measurement is the result of an integration over a period of time. An immediate response of the network is not obtained.

For the measurement of the group delay response, methods were worked out based on multiple (two or more, modulated or non-modulated) tone measurements. These measurements, however, are very time-consuming and not easy to apply.

Therefore, the invention aims at providing a method for the determination of transmission characteristics of transmission networks which does not show the disadvantages of the methods according to the state of the art.

The invention aims at delivering such a method which can be performed very fast and provides for an immediate response of the network.

The above aims are achieved by the fact that the test signal is transmitted in one single burst in time.

The method according to the invention is easy to apply, it is very fast and furthermore solely uses standard measuring devices and simple electronic circuits.

Furthermore, the method according to the invention is not based upon averaging during a period of time. It uses a single burst signal and provides in an immediate response from the transmission network. Consequently, faults inherent to the averaging techniques according to the state of the art are avoided.

As a result of the use of a single burst signal, the characterization of a transmission network can be performed very fast, such that no or only a minimal disturbance of the existing communication over the network takes place.

Furthermore, the choice of the test signal allows to exclude certain frequencies. This also results in a minimalisation of the disturbance of the existing communication over the network.

The transmitter sample frequency may be different from the receiver sample frequency. No windowing is necessary.

The digital test signal being build up of a sum of sinusoidal waves of different frequencies, it is easy to generate and furthermore the total energy in the test signal will be spread equally over the burst signal, on the one hand avoiding saturation of active devices and, on the other hand, increasing the accuracy of the measured values.

With a test signal which is an impulse response or a step response, most of the energy is generated at a relative short moment.

Such a test signal cannot be applied in active transmission networks, due to the following causes.

When no measures are taken to keep the performance low, such a test signal may saturate the amplifiers forming part of the system.

On the other hand, if, indeed, measures are taken to limit the performance, the performance in the frequency spectrum can have such a low value that the measuring results are no longer reliable.

When the test signal consists of a binary random sequence, the energy is spread over a time interval.

Although this form of embodiment effects a better performance than the above-mentioned test signals, it is still less suitable for application in the context of active transmission networks, due to its low performance.

A test signal consisting of a linear frequency sweep in time is difficult to generate in such a way that it remains constant in time. Furthermore, the calculation of the fast Fourier transform of such a test signal leads to problems.

The calculation manner based on fast Fourier transform is preferably applied for the determination of the parameters for characterization of the transmission network (see below).

According to the invention, the amplitudes of the sinusoidal waves may be adapted,such that said sinusoidal waves of different frequencies are equally represented in the digital test signal.

This invention also relates to a device which is particularly suitable for the application of the method according to the above forms of embodiment.

This invention thus also relates to a device for the determination of the transmission characteristics of a transmission network, between a transmitter and a receiver, whereby this device, at the transmitter side, comprises a memory, a control circuit connected thereto, and a digital-to-analog converter for converting a test signal at a first sample frequency before transmitting, and, at the receiver side, an analog-to-digital converter for converting the received analogous test signal into a digital test signal at a second sampling frequency which either differs from the first or not, and a signal processing unit for calculating the characteristics.

With the intention of better showing the characteristics of the invention, hereafter, by way of example without any limitative character, two preferred forms of embodiment of a method and device for the determination of the characteristics of a network are described, with reference to the accompanying drawings, wherein:

figure 1 schematically represents such a device according to the invention;
figure 2 schematically represents another form of embodiment of the device of figure 1.

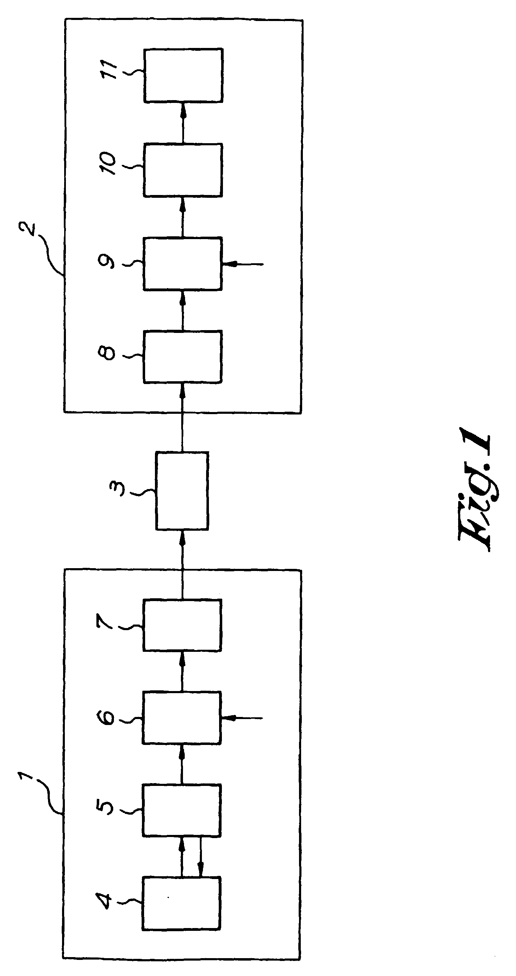

In figure 1, a device is represented for the determination of the transmission characteristics of a transmission network 3 situated between a transmitter 1 and a receiver 2.

At the side of the transmitter 1, the device comprises a memory 4 in which a digital test signal, also called test pattern, can be stored, and, successively, a control circuit 5, a digital-to-analog converter 6, and an anti-aliasing filter 7.

By means of the control circuit 5, the test signal at a first sampling frequency is converted by the digital-to-analog converter 6 into an analogous signal.

This analogous signal is further filtered by means of the anti-aliasing filter 7, in such a manner that undesired signals caused by the sampling are filtered out.

Imperfections in the control circuit 5, the digital-to-analog converter 6 and/or the filter 7 can be compensated by adapting the data pattern in the memory 4.

In order to limit the disturbance of the existing communication over the network to a minimum, use is made of a single burst signal for the transmission of the test signal over the network.

The rate of speed of the burst signal can be kept low, such that an eventual interference of the test signal with the existing communication over the transmission network is limited to a minimum.

At the side of the receiver 2, the transmitted signal is detected, and the device successively comprises a Nyquist filter 8, an analog-to-digital converter 9, a memory 10 and a signal processing unit 11.

First, the signal is filtered by the Nyquist filter 8. Subsequently, the filtered signal is converted by the analog-to-digital converter 9 into a digital signal at a second sampling frequency which either differs from the first or not, and is stored in the memory 10.

Subsequently, the stored data can be presented to the signal processing unit 11 for further signal processing, more particularly for the calculation of the transmission characteristics of the transmission network 3.

To this aim, one starts with the test signal which is transmitted over the network by the transmitter 1, and with the signal which is detected by the receiver 2 and which is converted from an analogous to a digital signal.

The components of the receiver 2 can be designed in hardware or can be provided by means of a digital sampling oscilloscope which may be provided with the possibility of performing the fast Fourier transform.

The test signal consists of a sum of sinusoidal waves, hereafter also called components.

The components are selected as follows.

Care has to be taken that sufficient components with different frequencies are composed to the test signal.

On the other hand, due to practical reasons, the number of samples taken must be kept as low as possible.

The relation of the sampling frequency at the transmitter side (first sampling frequency) to the number of samples is preferably equal to the frequency difference between the frequencies of the components with which the test signal is built up.

This frequency difference is a fraction of the sampling frequency at the transmitter side.

When this relation is fulfilled, all sinusoids will show an integer number of periods during the single burst signal.

This is advantageous when use is made of the fast Fourier transform for the further calculation of the transmission characteristics. When this relation is fulfilled, the fast Fourier transform of the sampling points in the time domain then will give an exact maximum for all components (at different frequencies).

The total length of the burst signal then is equal to the relation of the number of samples to the sampling frequency at the transmitter side (first sampling frequency).

The number of sinusoidal waves is then given by the relation of the bandwidth to be measured of the transmission network to the difference in frequency between the components of the sum of sinusoidal wave forms, increased by 1.

The choice of the above-mentioned parameters is followed by the summation of the sinusoidal components and the optimalization of the test signal.

The optimalization of the test signal comprises the adaption of the amplitude of the components, such that the waves of different frequencies are represented equally in the digital test signal. This comprises the sin x/x compensation and, eventually, also the omittance of certain frequencies in order to leave the existing communication over the network undisturbed.

The optimalization also comprises the adaption of the phases of the sinusoidal waves, such that the excitation of the transmission network in the time domain is constant during the measuring cycle.

The following example shall illustrate all that:

In a transmission network with a bandwidth of 20 MHz (frequency range from 5 MHz to 25 MHz), according to the Nyquist theoreme, the sampling frequency must be minimum 50 MHz.

It is presumed that the sampling frequency is chosen equal to 80 MHz.

The frequency difference between the sinusoidal components which are summed up in order to form the test signal then must be an integer fraction of the sampling frequency. By way of example, it is presumed that this difference is equal to 20 kHz.

Thus, 4000 samples are required (80 MHz/20 kHz).

Consequently, the duration of the burst signal is equal to 50 microseconds (4000/80 MHz).

The number of sinusoidal wave forms is:

$$[(25 \text{ MHz} - 5 \text{ MHz}) / 20 \text{ kHz}] + 1 = 1001.$$

With a repetition speed of several seconds, for example, 16 seconds, the working cycle is $3.125.10^{-6}$ or 1 to 320 000. This is a very low value, such that the synchronization of eventually present services definitely is not hindered.

The transmitted signal is detected at the side of the receiver 2, filtered through a Nyquist filter 8 and conversed into a digital signal.

The signal detected by the receiver 2 does not necessarily have to be sampled at the same sampling frequency as the sampling frequency applied at the transmitter side; it is sampled at a second sampling frequency which either differs from the first sampling frequency at the transmitter side or not.

However, the number of samples has to be an integer number of times the relation of the sampling frequency at the side of the receiver 2 up to the frequency difference between the sinusoidal wave forms. In the following, this integer number of time is indicated by `N'.

Applied to the numerical values of the above example, the following values are obtained:

With a sampling frequency at the receiver side of 100 MHz, the number of samples is minimum 5000. (namely, 100 MHz/20 kHz, with a minimum value of N=1).

In consideration of the fact that 4000 samples are transmitted with $80.10^6$ samples per second, and in consideration of the fact that the network furthermore adds group delay, this results in a practical value of 10.000 samples with N=2.

This high value, however, is not required. In the case of a smaller number of samples, values lying in between can be replaced by zeros.

Subsequently, the following characteristics of the transmission network are calculated in a signal processing unit: the amplitude response, the phase response and the group delay response.

This comprises the following processing steps:

- For the determination of the amplitude response of the transmission network, the magnitude of the fast Fourier transform of the signal detected by the receiver 2 is calculated, divided by the fast Fourier transform of the known signal, transmitted over the network by the transmitter 1.

- For the determination of the phase response, the angle of the above-mentioned relation is calculated.

- For the determination of the group delay response, the derivative is calculated of the unwrapped phase response, divided by $(-2\pi)$, whereby the derivative is calculated in each frequency sample of the fast Fourier transform.

For the amplitude as well as for the phase response, the method of the moving weighted average can be applied in order to obtain a smoother display.

In a variant, the memory 10 at the receiver side may be omitted. In this case, the processing in the processing unit 11 takes place at the actual moment (real time).

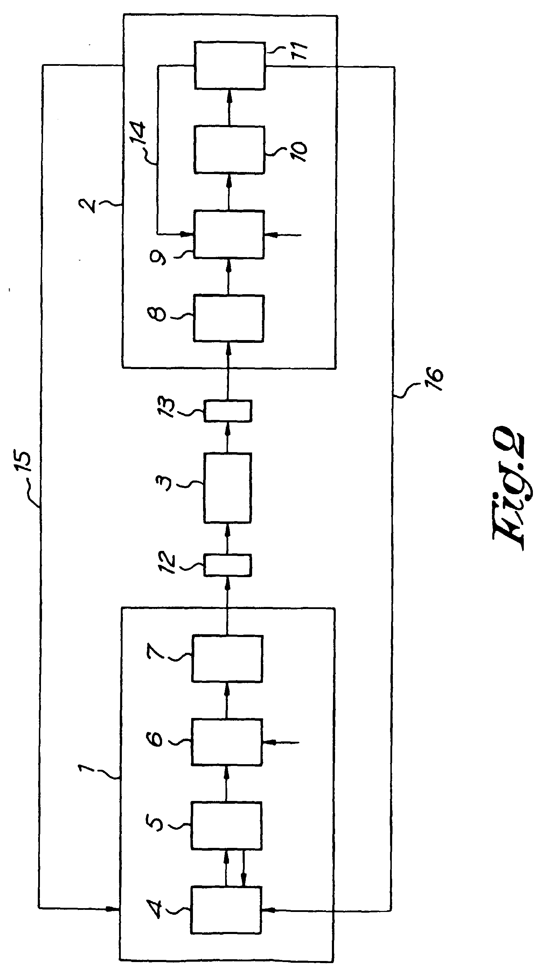

In another variant, shown in figure 2, a transducer 12 is inserted beween the transmitter 1 and the transmission network 3 while a corresponding transducer 13 is inserted between this transmission network 3 and the receiver 2.

Said transducers 12 and 13 are for instance acoustic transducers, whereby the transducer 12, for example a speaker, transforms the test signal in a sound and the transducer 13, for example a microphone, transforms the sound into an electrical signal.

In the embodiment shown in figure 2, the device comprises a trigger line 14 between the signal processing unit 11 and the analog-to-digital converter 9 for controlling the activity of this converter 9 and determining for example when the converter 9 starts and how much samples are taken.

A start/stop line 15 is also present between the signal processing unit 11 and the transmitter 1, particularly the memory 4, for remotely starting and stopping the transmitter 1.

The memory 4 may be downloaded by means of a download line 16 from the signal processor unit.

It is obvious that all the lines 14, 15 an 16 are not required and that the device may contain no or one or more of these lines, as well with as without the transducers 12 and 13.

The above described embodiments of the method according to the invention permit a very quick characterization.

The relation between the transmitter and receiver sample frequencies, on the one hand, and the value of the test sinusoidal waves permit a simple calculation of the amplitude response, the phase response and the group delay response, avoiding the use of any window for the fast Fourrier transform.

An optimalized phase of each test sinusoidal wave is used to obtain a uniform transmission in time of the transmission network 3, what is important for the linearity of the network 3 but also for the accuracy of the calculation.

Only one single burst is required to characterize the network. As only one measurement is necessary, the disturbance of the existing services is minimal and can even be completely excluded by defining gaps in the spectrum.

**Claims**

1. Method for the determination of transmission characteristics of a transmission network (3) connecting a transmitter (1) and a receiver (2), which method comprises the following steps:

   - the conversion of a digital test signal, built up of a sum of sinusoidal waves of different frequencies into an analogous signal at a first sampling frequency,
   - the transmission of this analogous signal by means of the network (3), from the transmitter (1) to the receiver (2), under the control of a burst signal,
   - the detection of the transmitted analogous signal by the receiver (2) and the conversion of the received analogous signal into a received digital signal at a second sampling frequency which either differs from the first or not,
   - the storage of the received digital signal,
   - the calculation of said transmission characteristics based upon the received digital signal and the digital test signal,
   characterized in that the test signal is transmitted in one single burst in time.

2. Method according to claim 1, characterized in that said sinusoidal waves answer to the following criteria:

   - the frequency difference between the frequencies of said sinusoidal waves is a fraction of said first sampling frequency, and
   - the number of sinusoidal waves is determined by the relation of the bandwidth of said transmission network (3) to said frequency difference, increased by 1.

3. Method according to claim 1 or 2, characterized in that the amplitudes of said sinusoidal waves are adapted, such that said sinusoidal waves of different frequencies are equally represented in the digital test signal.

4. Method according to claim 2 or 3, characterized in that the phases of said sinusoidal waves are adapted, such that the excitation of the transmission network (3) in the time domain is constant over the single burst.

5. Method according to any of the preceding claims, characterized in that the second sampling frequency is adjusted such that at the side of the receiver (2), a number of sampling points is obtained which is equal to an integer number of times the relation of the first sampling frequency to said frequency difference.

6. Method according to any of the preceding claims, characterized in that said characteristics comprise the amplitude response of the transmission network (3), and whereby this amplitude response is calculated as the magnitude of the relation of the fast Fourier transform of the received digital signal to the fast Fourier transform of the transmitted digital signal.

7. Method according to any of the claims 1 to 5, characterized in that said characteristics comprise the phase response of the transmission network (3), and whereby this phase response is calculated as the angle of the relation of the fast Fourier transform of the received digital signal to the fast Fourier transform of the transmitted digital signal.

8. Method according to any of the claims 1 to 5, characterized in that said characteristics comprise the group delay response of the transmission network (3), and whereby this group delay response is calculated as the derivative of the unwrapped phase response divided by $(-2\pi)$, whereby the derivative is calculated in all frequency samples of the fast Fourier transform.

9. Method according to any of the preceding claims, characterized in that is started with a digital test signal, stored in a memory (4).

10. Method according to claim 9, characterized in that imperfections during control, conversion and/or filtration at the transmitter side are compensated by the adaptation of the data pattern of the digital test signal in the memory (4).

11. Method according to claim 9 of 10, characterized in that the memory (4) of the transmitter (1) is remotely started and stopped.

12. Method according to any of the preceding claims, characterized in that before and after transmission by means of the transmission network (3), the test signal is transduced to the proper network dimensions, like pressure, temperature, electro-magnetic waves, etc..

13. Method according to any of the preceding claims, characterized in that the digital test signal which is converted in the transmitter (1) is remotely downloaded.

14. Method according to any of the preceding claims, characterized in that the analog-to-digital conversion in the receiver (2) is triggered by the unit (11) calculating the characteristics.

15. Device for the determination of the transmission characteristics of a transmission network (3) between a transmitter (1) and a receiver (2), characterized in that it comprises, at the side of the transmitter (1), a memory (4), a control circuit (5) connected thereto, a digital-to-analog converter (6) for converting a test signal at a first sampling frequency before transmission, and at the side of the receiver, an analog-to-digital converter (9) for converting the received analogous test signal to a digital test signal at a second sampling frequency which either differs from the first or not, and a signal processing unit (11) for calculating the characteristics.

16. Device according to claim 15, characterized in that it comprises between the transmitter (1) and the receicer (2), on the one hand, and the transmission network (3), on the other hand, a transducer (12 resp. 13).

17. Device according to claim 15 or 16, characterized in that it comprises one or more of following lines: a trigger line (14) between the signal processing unit (11) and the analog-to-digital converter (9); a start/stop line (15) between the processing unit (11) and the transmitter (1); and a download line (16) between the signal processing unit (11) and the memory (4) of the transmitter (1).

*Fig.1*

EP 0 882 994 A1

*Fig.2*

EP 0 882 994 A1

**European Patent Office**

## EUROPEAN SEARCH REPORT

Application Number

EP 98 20 1844

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US 4 301 536 A (FAVIN DAVID L ET AL) 17 November 1981 * abstract * * column 1, line 28 - column 2, line 16 * * column 3, line 40 - line 62 * * column 6, line 6 - line 13; figures 1,2 * * column 7, line 15 - line 42 * | 1,4,6,7, 9,15 | G01R31/28 H04B17/00 |
| A | US 3 573 611 A (BERGEMANN GERALD T ET AL) 6 April 1971 * abstract * | 1,4 | |
| A | DE 37 13 643 A (DEUTSCHE FORSCH LUFT RAUMFAHRT) 10 November 1988 * abstract * * column 4, line 17 - column 5, line 10; figure 1 * | 1,15 | |

| TECHNICAL FIELDS SEARCHED (Int.Cl.6) |
|---|
| G01R H04B |

The present search report has been drawn up for all claims

| Place of search | Date of completion of the search | Examiner |
|---|---|---|
| THE HAGUE | 14 September 1998 | Bossen, M |